# EUROPEAN PATENT SPECIFICATION

(11) **EP 3 939 820 B1**
(45) Date of publication and mention of the grant of the patent: **09.10.2024**
(21) Application number: 19919558.7
(22) Date of filing: 30.10.2019
(51) Int. Cl.: B60L 3/00, B60W 30/18, B60T 8/175, B60T 8/176, B60L 3/10, B60T 8/17

(54) **TRAIN CONTROL DEVICE AND TRAIN CONTROL METHOD**
ZUGSTEUERUNGSVORRICHTUNG UND ZUGSTEUERUNGSVERFAHREN
DISPOSITIF DE COMMANDE DE TRAIN ET PROCÉDÉ DE COMMANDE DE TRAIN

(30) Priority: 15.03.2019 JP 2019047904
(43) Date of publication of application: 19.01.2022
(73) Proprietor: Hitachi, Ltd., Tokyo 100-8280 (JP)
(72) Inventor: FUCHIGAMI, Koki, Tokyo 100-8280 (JP); KOIKE, Jun, Tokyo 100-8280 (JP); AKIYAMA, Hiroyuki, Tokyo 100-8280 (JP)
(74) Representative: Mewburn Ellis LLP
(86) International application number: PCT/JP2019/042482
(87) International publication number: WO 2020/188870

(56) References cited:
- EP-B1- 0 141 157
- JP-A- 2001 286 009
- JP-A- 2012 034 456
- JP-A- 2012 034 456
- JP-A- 2013 205 248
- JP-A- 2017 203 724
- JP-A- H0 382 301
- JP-A- H06 122 365
- JP-B2- 6 279 446
- US-A- 4 896 090

## Description

### Technical Field

The present invention relates to a train control device and a train control system.

### Background Art

As a method for deciding occurrence of a wheel slip/skid state of a train, there is, e.g., a technology described in Patent Literature 1 (PTL 1). In this patent literature, there is a description below: "based on a difference between a first jerk value based on a rotation detection signal produced by a rotation detection device and a second jerk value in a train traveling direction based on a sensor value from an inertia sensor at the most recent backward from the timing of detecting occurrence of wheel slip/skid, correction start timing corresponding to or proximate to a start point of a slip/skid period is decided."

Patent Literature 2 proposes a locomotive propulsion system. Patent Literature 3 proposes a slip limitation control for rail vehicles. Patent Literature 4 proposes an electric motor control method. Patent Literature 5 proposes a speed detection device for detecting the speed of a train. Patent Literature 6 proposes a running information calculating means.

### Citation List

### Patent Literature

Patent Literature 1: Japanese Unexamined Patent Application Publication No. 2016-82660
Patent Literature 2: US 4 896 090 A
Patent Literature 3: EP 0 141 157 B1
Patent Literature 4: JP 2012 034456 A
Patent Literature 5: JP 2013 205248 A
Patent Literature 6: JP 6 279446 B2

### Summary of Invention

### Technical Problem

According to Patent Literature 1, installation of inertia sensors is necessary for detecting the wheel slip/skid state of a train. Hence, it is required to secure installation locations for installing inertia sensors. Also, an additional cost arises in terms of maintenance.

Therefore, the present invention is intended to provide a technology for detecting the wheel slip and skid states of a train using a rotary velocity sensor to detect rotation of an axle of a train.

### Solution to Problem

To solve a problem noted above, a train control device and a train control system are provided according to the claims.

### Advantageous Effects of Invention

According to the present invention, it is possible to detect the wheel slip/skid state of a train using a rotary velocity sensor to detect rotation of an axel of a train.

Problems, configurations, and advantageous effects other than described above will be made apparent from the following description of reference examples and from the embodiment.

### Brief Description of Drawings

Fig. 1 is a schematic structural diagram of a train control system which is one reference example of the present invention.
Fig. 2 is a flowchart illustrating a procedure for deciding occurrence of the wheel slip/skid state by a train control device.
Fig. 3 is a diagram representing a relationship between train jerk and a slip/skid decision threshold.
Fig. 4 is a diagram representing a relationship between train velocity and train velocity at the last time.
Fig. 5 is a flowchart illustrating a procedure for deciding occurrence of the wheel slip/skid state of a train, taking account of a delay time, which is performed in a train control system which is an embodiment of the present invention.
Fig. 6 is a diagram representing a relationship between train jerk and a slip/skid decision threshold in relation to Fig. 5
Fig. 7 is a schematic structural diagram of a train control system which is another reference example of the present invention.
Fig. 8 is a flowchart illustrating a procedure for calculating train control velocity in the system depicted in Fig. 7.
Fig. 9 presents examples of results of calculating train control velocity according to Fig. 8.

### Description of Embodiments and Reference Examples

In the following, an embodiment, and reference examples not covered by the claims, are described with the aid of the drawings.

### First Reference Example

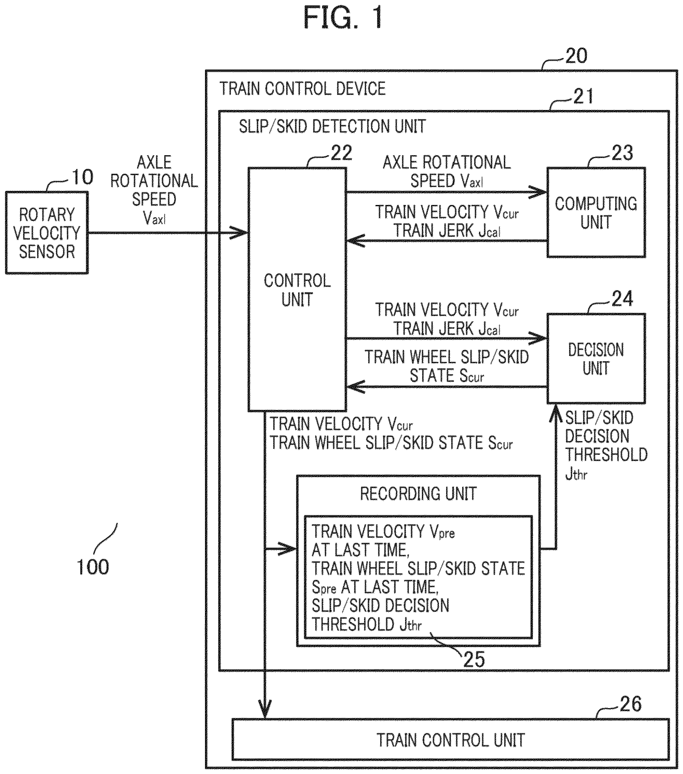

Fig. 1 is a schematic structural diagram of a train control system which is one reference example of the present invention. A train control system 100 includes a train control device 20 and a rotary velocity sensor 10. The train control system 100 decides occurrence of a train wheel slip/skid state S_{cur} using the rotary velocity sensor 10 and the train control device 20.

The rotary velocity sensor 10 is connected to the train control device 20 and sends axle rotational speed Vₐₓₗ to the train control device 20. The rotary velocity sensor 10 should be installed in a position it can detect rotation of an axle (not depicted) and may be installed in, e.g., an axle box. Also, for this sensor, any type of sensor may be used, such as a dynamo sensor which converts axle rotation to voltage and a pulse generator which measures axle rotation using light.

The train control device 20 is comprised mainly of a slip/skid detection unit 21 and a train control unit 26 and at least one train control device is mounted in one train set. The slip/skid detection unit 21 is comprised mainly of a control unit 22, a computing unit 23, a decision unit 24, and a recording unit 25.

First, a major internal structure of the slip/skid detection unit 21 is described. The slip/skid detection unit 21 includes at least the control unit 22, the computing unit 23, the decision unit 24, and the recording unit 25. Each of these functional units may be installed in a single computing device or located dispersedly.

The control unit 22 periodically acquires axle rotational speed Vₐₓₗ from the rotary velocity sensor 10 and sends it to the computing unit 23. Note that control unit 22 may include an interface to acquire pulse signals that the rotary velocity sensor 10 outputs, instead of axle rotational speed Vₐₓₗ.

The computing unit 23 computes train velocity V_{cur} from the axle rotational speed Vₐₓₗ acquired from the control unit 22. It also computes train jerk J_{cal} by second-order differentiating the train velocity V_{cur}. The computing unit 23 sends the computed train velocity V_{cur} and train jerk J_{cal} to the control unit 22. Note that train jerk J_{cal} may, for example, be computed based on the train velocity V_{cur}, train velocity Vₚᵣₑ at the last time, and train velocity Vₚᵣₑ₂ at the second last time; or it may be computed from train acceleration α_{cal} at the current time and train acceleration αₚᵣₑ at the last time. The train acceleration α_{cal} can be calculated through first-order differentiation of the train velocity.

Note that a computing period of the computing unit 23 termed herein is a period between train velocity computing operations cyclically taking place within a predetermined time frame for computing jerk information. In this sense, computing at one period before is the last computing operation (i.e., a previous computing operation) and computing at the current time is the latest computing operation. Note that train velocity values for use in computing jerk information do not need to be obtained serially in a series of computing periods. In that case, the train velocity V_{cur}, train velocity Vₚᵣₑ at the last time, and train velocity Vₚᵣₑ₂ at the second last time are velocity information values computed at three time points selected within the above time frame and they are ordered in reverse chronological order.

The control unit 22 sends the train velocity V_{cur} and train jerk J_{cal} received from the computing unit 23 to the decision unit 24. The decision unit 24 compares the train jerk J_{cal} received from the control unit 22 against a slip/skid decision threshold Jₜₕᵣ predefined in the recording unit 25. If an absolute value of the train jerk J_{cal} is equal to or more than the slip/skid decision threshold Jₜₕᵣ, the decision unit 24 compares the train velocity V_{cur} at the current time against the train velocity Vₚᵣₑ at the last time recorded in the recording unit 25 when a last-time slip/skid decision was made.

If the train velocity V_{cur} at the current time is larger than the train velocity Vₚᵣₑ at the last time, the decision unit 24 sends slip state as the train wheel slip/skid state S_{cur} to the control unit 22. Conversely, if the train velocity V_{cur} at the current time is smaller than the train velocity Vₚᵣₑ at the last time, the decision unit 24 sends skid state as the train wheel slip/skid state S_{cur} to the control unit 22.

Besides, if the absolute value of the train jerk J_{cal} received from the control unit 22 is less than the slip/skid decision threshold Jₜₕᵣ, the decision unit 24 sends a normal state as the train wheel slip/skid state S_{cur} to the control unit 22. The control unit 22 sends the train velocity V_{cul} received from the computing unit 23 and the train wheel slip/skid state S_{cur} received from the decision unit 24 to the train control unit 26.

The recording unit 25 holds record of train velocity Vₚᵣₑ at the last time, train wheel slip/skid state Sₚᵣₑ at the last time, the slip/skid decision threshold Jₜₕᵣ, and train velocity Vₚᵣₑ₂ at the second last time. Note that, once a slip/skid decision on a train has been made, the recording unit records train velocity V_{cur} and train wheel slip/skid state S_{cur} at that point of time as train velocity Vₚᵣₑ at the last time and train wheel slip/skid state Sₚᵣₑ at the last time. Note that the recording unit 25 may be a part of a recording device that the train control system 100 has or may be provided independently.

The train control unit 26 computes train control velocity V_{con} based on the train velocity V_{cur} and the train wheel slip/skid state S_{cur} acquired from the slip/skid detection unit 21. The train control velocity Vcon is used for, inter alia, calculating a traveling position of the train and making a decision as to whether to output a braking command to the train. If the train is placed in a wheel slip or skid state, a correction is made of the train velocity V_{cur} and the corrected train velocity is used for train control. Note that, although the slip/skid detection unit 21 and the train control unit 26 appear to be different devices, as depicted in Fig. 1, they may be installed in a single computing device.

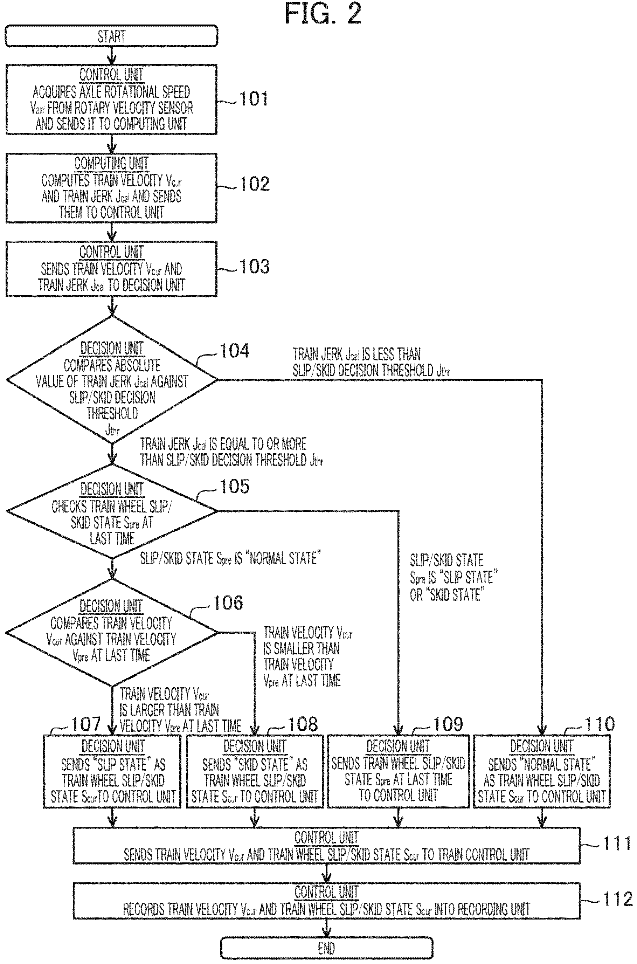

Fig. 2 is a flowchart illustrating a procedure for deciding occurrence of a train wheel slip/skid state S_{cur} using axle rotational speed Vₐₓₗ from the rotary velocity sensor 10.

Operation based on the flowchart in Fig. 2 is as described below. Note that any information that is computed in processing steps mentioned below is stored in the recording unit 25. Besides, the control unit 22, the computing unit 23, or the decision unit 24 acquires information directly or via another functional unit from the recording unit 24 and performs a computing operation or stores a result of the computing operation into the recording unit 25 again. For ease of understanding, reading information from the recording unit 25 and writing information to the recording unit 25 are not described as processing steps, unless otherwise mentioned.

Step 101: the control unit 22 acquires axle rotational speed Vₐₓₗ from the rotary velocity sensor 10 and sends it to the computing unit 23.

Step 102: the computing unit 23 computes train velocity V_{cur} from the axle rotational speed Vₐₓₗ received from the control unit 22. Moreover, it computes train jerk J_{cal} by second-order differentiating the train velocity V_{cur}. The computing unit 23 sends the calculated train velocity V_{cur} and train jerk J_{cal} to the control unit 22. Note that train jerk J_{cal} is computed based on train velocity values at three time points that are discrete to some extent from among multiple train velocity values computed within the predetermined time frame and those time points. The foregoing time frame can be adjusted depending on operational status and characteristics of the train and track surface conditions and may be changed, as appropriate.

Step 103: the control unit 22 sends the train velocity V_{cur} and train jerk J_{cal} received from the computing unit 23 to the decision unit 24.

Step 104: the decision unit 24 compares an absolute value of the train jerk J_{cal} received from the control unit 22 against the slip/skid decision threshold Jₜₕᵣ. If the absolute value of the train jerk J_{cal} is equal to or more than the slip/skid decision threshold Jₜₕᵣ, a transition is made to step 105. Otherwise, if the absolute value of the train jerk J_{cal} is less than the slip/skid decision threshold Jₜₕᵣ, a transition is made to step 110.

Step 105: the decision unit 24 checks the train wheel slip/skid state Sₚᵣₑ at the last time recorded in the recording unit 25. If the train wheel slip/skid state Sₚᵣₑ at the last time is normal state, a transition is made to step 106. Otherwise, if the train wheel slip/skid state Sₚᵣₑ at the last time is slip or skid state, a transition is made to step 109.

Step 106: The decision unit 24 compares the train velocity V_{cur} at the current time received from the control unit 22 against the train velocity Vₚᵣₑ at the last time recorded in the recording unit 25. If the train velocity V_{cur} at the current time is larger than the train velocity Vₚᵣₑ at the last time, a transition is made to step 107. Otherwise, if the train velocity V_{cur} at the current time is smaller than the train velocity Vₚᵣₑ at the last time, a transition is made to step 108.

Step 107: the decision unit 24 sends slip state as the train wheel slip/skid state S_{cur} to the control unit 22.

Step 108: the decision unit 24 sends skid state as the train wheel slip/skid state S_{cur} to the control unit 22.

Step 109: the decision unit 24 sends the train wheel slip/skid state Sₚᵣₑ at the last time as the train wheel slip/skid state S_{cur} to the control unit 22.

Step 110: the decision unit 24 sends a normal state as the train wheel slip/skid state S_{cur} to the control unit 22.

Step 111: the control unit 22 sends the train velocity V_{cur} and the train wheel slip/skid state S_{cur} to the train control unit 26.

Step 112: the control unit 22 records the train velocity V_{cur} and the train wheel slip/skid state S_{cur} into the recording unit 25 as train velocity Vₚᵣₑ at the last time and train wheel slip/skid state Sₚᵣₑ at the last time.

The above steps from step 101 to step 112 are executed each time the slip/skid detection unit 21 acquires axle rotational speed Vₐₓₗ from the rotary velocity sensor 10.

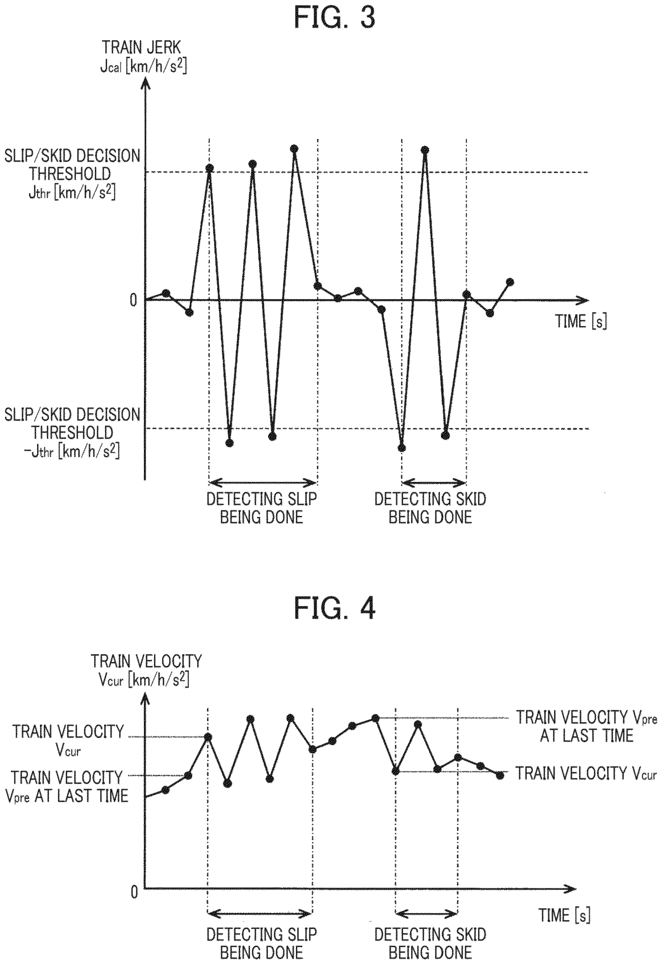

Fig. 3 is a diagram representing a relationship between train jerk and the slip/skid decision threshold. This represents a relationship between the train jerk J_{cal} and the slip/skid decision threshold Jₜₕᵣ mentioned in the step 104 in Fig. 2. When the absolute value of the train jerk J_{cal} is equal to or more than the slip/skid decision threshold Jₜₕᵣ, the decision unit decides that the train is placed in a wheel slip or skid state. Note that, as for a decision of whether the wheel slip or skid state occurs, either state is determined to occur by comparing train velocity V_{cur} at the current time against train velocity Vₚᵣₑ at the last time immediately before detecting the wheel slip or skid state. A relationship in this respect is represented in Fig. 4.

Fig. 4 is a diagram representing a relationship between train velocity and train velocity at the last time. If train velocity V_{cur} at the current time is larger, a decision is made that the slip state occurs. However, as a result of comparing train velocity V_{cur} at the current time against train velocity Vₚᵣₑ at the last time immediately before detecting the wheel slip or skid state, if train velocity V_{cur} at the current time is smaller, a decision is made that the skid state occurs.

Nevertheless, comparing train velocity V_{cur} at the current time against train velocity Vₚᵣₑ at the last time is performed only when deciding whether the wheel slip or skid state has begun to occur. When the absolute value of the train jerk J_{cal} has become less than the slip/skid decision threshold Jₜₕᵣ, a decision is made that the wheel slip or skid state has terminated.

The reason for adopting this manner of processing can be explained as below. At the moment when the slip state occurs, the axle rotates at higher speed relative to the actual train velocity and, therefore, the train velocity increases by axle rotation. Then, in the slip state, the state of adhesion between the wheels and the track surface varies. When the state of adhesion between the wheels and the track surface becomes stronger, the train velocity calculated based on the axel rotational speed decreases. As the state of adhesion weakens, the train velocity appears to increase again. This phenomenon continues until removal of the slip state.

On the other hand, at the moment when the skid state occurs, the axle rotates at lower speed relative to the actual train velocity and, therefore, the train velocity decreases by axle rotational speed. Then, because the state of adhesion between the wheels and the track surface varies also in the skid state, the train velocity calculated from the axle rotational speed fluctuates relative to the actual train velocity. As noted above, the train velocity may increase and decrease iteratively as observed for a period when the wheel slip or skid state continues. Hence, taking this into account, it is desirable to perform velocity comparison only when deciding occurrence of the wheel slip or skid state.

Alternatively to the foregoing processing steps, the procedure may be arranged so that a decision is always made as to whether the train velocity has changed and a logic may be adopted in which the decision result is not reflected in deciding whether the skid or slip state occurs, while the slip or skid state continues. For example, the procedure may be arranged as below. After changing the order of step 105 and step 106 in Fig. 2, processing steps depending on the decision of step 106 are placed downstream of the branches of step 105 respectively. Then, checking the train wheel slip/skid state Sₚᵣₑ at the last time is made at each of the processing steps depending on the decision of step 106. If the above state Sₚᵣₑ is wheel slip or skid state, a transition is made to step 109; otherwise, a transition is made to step 107 or step 108.

As described in the foregoing, based on axle rotational speed Vₐₓₗ acquired from the rotary velocity sensor 10, a decision is made as to whether the train is placed in the train wheel slip/skid state S_{cur} within the slip/skid detection unit 21. A result of the decision is sent to the train control unit 26 and used for calculating train control velocity V_{con}.

Besides, the foregoing reference example can be paraphrased as below. In other words, the train control system 100 has an interface to acquire pulse signals from the rotary velocity sensor 10 and includes the computing unit 23 that converts the pulse signals to velocity information, the recording unit 25 to record velocity information, and the decision unit 24. Here, the recording unit 25 is configured to store at least three pieces of velocity information (train velocity at the second last time, train velocity at the last time, and train velocity at the current time) obtained within the determined time frame at the step 102. Then, the computing unit 23 computes jerk information based on those pieces of velocity information and the decision unit 24 detects slip/skid occurrence based on the jerk information.

Besides, in a case where acceleration information is used in computing jerk information, the recording unit 25 is configured to store two pieces of acceleration information based on the pieces of velocity information (train velocity at the second last time, train velocity at the last time, and train velocity at the current time) obtained within the foregoing time frame. Then, the computing unit 23 may compute jerk information based on the two pieces of acceleration information and the decision unit 24 may detect slip/skid occurrence based on the jerk information.

Note that, in each of these examples, the decision unit 24 compares multiple pieces of velocity information relevant to computing jerk information; namely, by comparing train velocity at the current time against train velocity at the last time, it is also possible to discriminate between slip occurring and skid occurring.

According to the foregoing reference example, a technology to detect the slip state and the skid state of a train using the rotary velocity sensor to detect axle rotation of the train is provided. In other words, it is possible to make it unnecessary to secure a space for installing a new sensor to detect the wheel slip/skid state of a train. Hence, for example, especially for an existing train, the following can be dispensed with: additional work and cost before introduction for remodeling existing hardware and installing an inertia sensor and consideration on securing an installation location among others. While installation of new sensors as mentioned tends to generate additional cost in terms of maintenance, the foregoing reference example produces an advantage in this respect as well.

Note that, in the foregoing first reference example, although the same value of the slip/skid decision threshold Jₜₕᵣ is used as the condition for deciding whether the slip state occurs and whether the skid state occurs; different values of thresholds may be defined.

Also, although a method for detecting the wheel slip/skid of a train using a single rotary velocity sensor 10 is described in the first reference example, multiple rotary velocity sensors may be used. In a case where multiple rotary velocity sensors are used, computing train jerk J_{cal} from axle rotational speed Vₐₓₗ and determining occurrence of the train wheel slip/skid state S_{cur} may be performed separately with respect to each rotary velocity sensor.

Besides, an arrangement may be made such that the wheel slip or skid state detected by the control unit 22 is recorded, linked with position information on a traveling route and can be used for presuming a section where wheel slip/skid tends to occur on the traveling route. By presuming such a section, it would become possible to analyze traveling conditions to make the wheel slip and skid less likely to occur and seek for more effective train operation.

### Embodiment of the Invention

This embodiment takes account of a delay time T_{del} when deciding whether the wheel slip or skid state of a train has terminated according to the first reference example. The delay time T_{del} is recorded in advance in the recording unit 25. Also, in the present embodiment, the recording unit 25 stores train velocity Vₚᵣₑ at the last time, train wheel slip/skid state Sₚᵣₑ at the last time, slip/skid decision threshold Jₜₕᵣ, and train jerk J_{cal} (reference jerk values in a set) for a period of the delay time T_{del}.

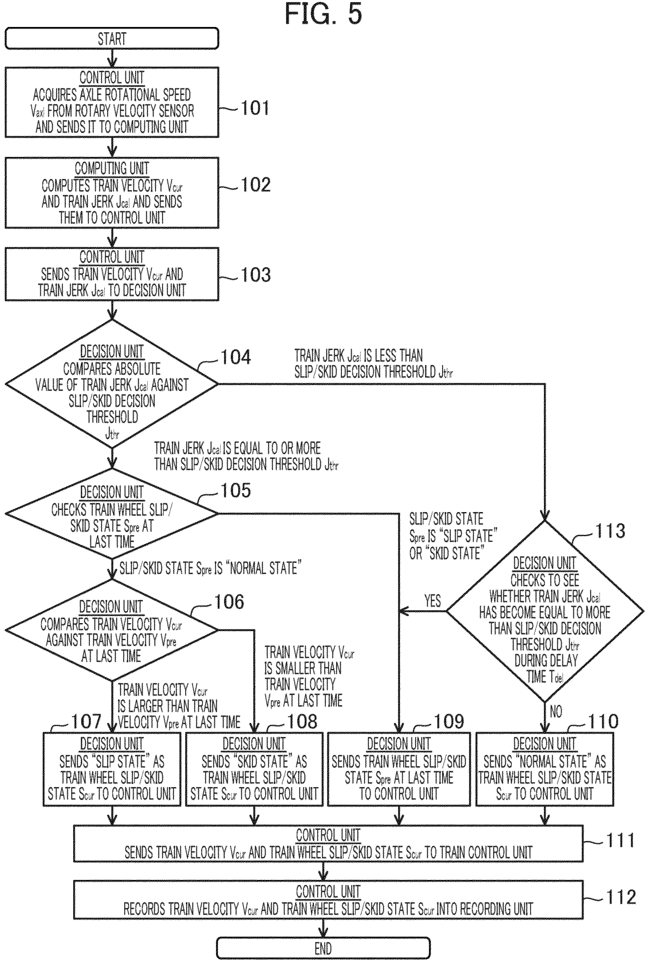

Fig. 5 presents a flowchart illustrating a procedure for deciding occurrence of the wheel slip/skid state S_{cur} of a train, taking account of the delay time, which is performed in a train control system which is another embodiment of the present invention. This flowchart takes account of the delay time Tdel when deciding whether the wheel slip or skid state of a train has terminated in addition to the flowchart in Fig. 2. A step added to the flowchart in Fig. 2 is only mentioned below.

Step 113: the decision unit 24 checks to see whether the absolute value of train jerk J_{cal} has become equal to or more than the slip/skid decision threshold Jₜₕᵣ during the delay time T_{del} following the point of time when the absolute value of train jerk J_{cal} has become less than the slip/skid decision threshold Jₜₕᵣ. If the train jerk J_{cal} has become equal to or more than the slip/skid decision threshold Jₜₕᵣ during the delay time T_{del}, a transition is made to step 109. Otherwise, if the train jerk J_{cal} has not become equal to or more than the slip/skid decision threshold Jₜₕᵣ, a transition is made to step 110.

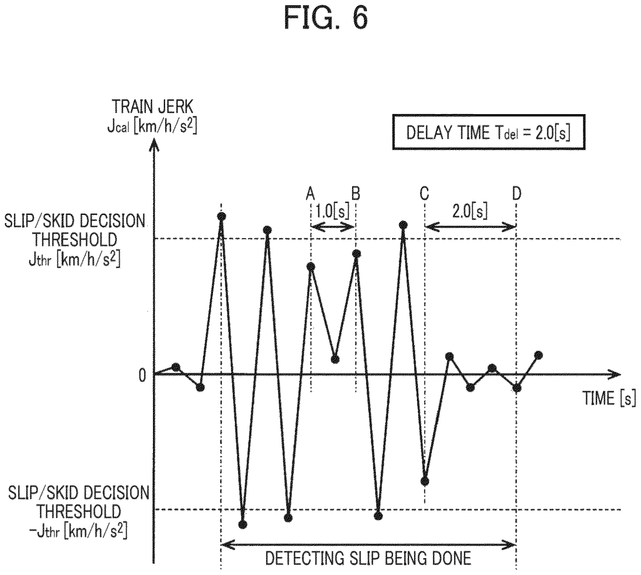

Fig. 6 is a diagram representing a relationship between train jerk and the slip/skid decision threshold. This represents a relationship between the train jerk J_{cal} and the slip/skid decision threshold Jₜₕᵣ mentioned in the step 104 and step 113 in Fig. 5.

A concept of how to decide whether the wheel slip or skid state has begun to occur is the same as described with Fig. 3 and Fig. 4. When a state in which the absolute value of train jerk J_{cal} is less than the slip/skid decision threshold Jₜₕᵣ has continued over the delay time T_{del} (when all reference jerk values in a set also have become less than the slip/skid decision threshold Jₜₕᵣ), a decision is made that the wheel slip or skid state has terminated. For example, when the delay time T_{del} is 2.0 seconds, the train jerk J_{cal} is less than the slip/skid decision threshold Jₜₕᵣ for a period from point A and point B in Fig. 6, but does not remain less than the threshold Jₜₕᵣ over the delay time T_{del}; therefore, a decision is made that the wheel slip or skid state continues.

However, the train jerk J_{cal} is less than the slip/skid decision threshold Jₜₕᵣ for a period from point C and point D and remains less than the threshold Jₜₕᵣ over the delay time T_{del}; therefore, a decision is made that the wheel slip or skid state has terminated at point D.

Specifically, in the train control system 100 of the present embodiment, the recording unit 25 is configured to retain a predetermined number of pieces of jerk information which are acquired for each computing period, according to a method (a queue method) that stores a latest piece of information, while removing an oldest piece of information. Note that the number of pieces of this jerk information to be retained may be determined by the number of computing periods falling within the delay time. The decision unit 24 is configured to check the reference jerk values in a set corresponding to those pieces of jerk information, once the absolute value of train jerk J_{cal} has become less than the slip/skid decision threshold Jₜₕᵣ, and decides whether or not slip/skid has terminated depending on a result of the checking.

By introducing the delay time T_{del} as above, hysteresis can be taken into account in deciding whether the wheel slip or skid state has terminated in comparison with the first reference example. Thereby, it is possible prevent decision chattering when deciding whether the wheel slip or skid state has terminated. Additionally, introducing the delay time T_{del} as above is also effective for reducing a momentary effect of noise included in axle rotational speed Vₐₓₗ acquired from the rotary velocity sensor 10.

In other words, the present embodiment makes it possible to decide whether the wheel slip or skid state has terminated under high reliability. Specifically, when deciding whether the wheel slip or skid state has terminated (step 113), by adding a step of checking the train jerk J_{cal} status for the most recent predetermined period, it is possible to decide whether shrinkage in the absolute value of train jerk J_{cal} occurs momentarily and, in fact, the wheel slip or skid state continues or the absolute value of train jerk J_{cal} has shrunk, since a condition in which such state can be regarded as terminated actually has been reached.

Note that, although multiple train jerk J_{cal} values obtained during the delay time are to be retained in the foregoing example, instead, a maximum absolute value of multiple train jerk J_{cal} values obtained during the delay time may be retained. In this case, each time the delay time is reset, a maximum absolute value of train jerk for the time frame of the newly set delay time is retained. By comparing that value against the slip/skid decision threshold Jₜₕᵣ, the same operation can be implemented.

As above, by introducing an additional logic to decide whether the wheel slip or skid state has terminated, it would be easy to prevent such an event (chattering) that a decision is made that the train is in a normal state only from the train jerk J_{cal} at the current time, whereas, in fact, either of the wheel slip and skid states continues, and the decision alternates and oscillates between that the train is in a normal state and that the train is in either of the wheel slip and skid states.

Note that, in the flowchart presented in Fig. 5, although a decision of whether the wheel slip or skid state has terminated is made at step 104 and step 113, a yet additional different logic for the decision may be placed preceding or following the step 113 or another decision logic may be placed instead of the step 113.

In the foregoing embodiment, although the delay time T_{del} is taken into account only when deciding whether the wheel slip or skid state has terminated, the delay time T_{del} may also be taken into account when deciding whether the wheel slip or skid state has begun to occur. Alternatively, the delay time T_{del} may be taken into account only when deciding whether the wheel slip or skid state has begun to occur.

Furthermore, a method is adopted in which switching of whether or not to introduce the delay time T_{del} in deciding whether the wheel slip or skid state has begun to occur and whether the wheel slip or skid state has terminated is performed depending on a speed zone of axle rotational speed Vₐₓₗ acquired from the rotary velocity sensor 10.

### Second Reference Example

In order to calculate train control velocity V_{con}, which is performed by the train control unit according to the first reference example and the embodiment, the second reference example uses axle rotational speed Vₐₓₗ from at least one or more rotary velocity sensors and train velocity V_{dop} from a non-contact velocity sensor 30, namely, a velocity sensor that is unaffected by the wheel slip or skid state of a train and, for example, calculates train velocity using a Doppler effect.

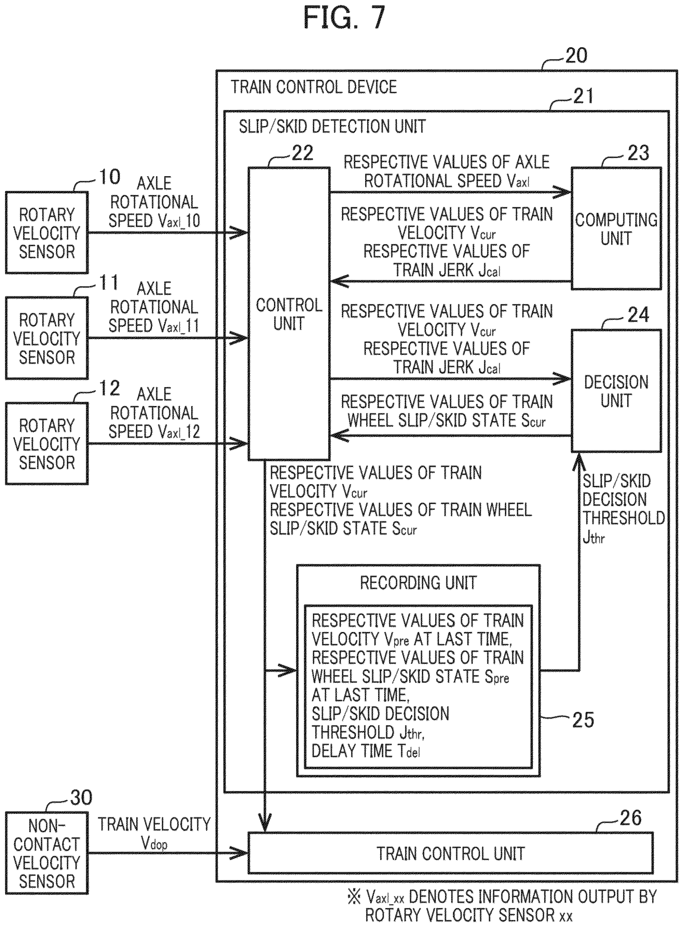

Fig. 7 is a schematic structural diagram of a train control system which is yet another reference example of the present invention. This depicts a schematic structure of the system that calculates train control velocity V_{con} using three rotary velocity sensors 10, 11, and 12 and one non-contact velocity sensor 30.

Rotary velocity sensors 11 and 12 and the non-contact velocity sensor 30 are added to the system structural diagram in Fig. 1. The slip/skid detection unit 21 acquires three values of axle rotational speed Vₐₓₗ from the three rotary velocity sensors. From the acquired respective values of axle rotational speed Vₐₓₗ, respective values of train velocity V_{cur} and respective values of train jerk J_{cal} are computed and, based on them, respective values of train wheel slip/skid state S_{cur} are determined. The train control unit 26 calculates train control velocity V_{con} using the respective values of train velocity V_{cur} and the respective values of train wheel slip/skid state S_{cur} acquired from the slip/skid detection unit 21 and train velocity V_{dop} from the non-contact velocity sensor 30.

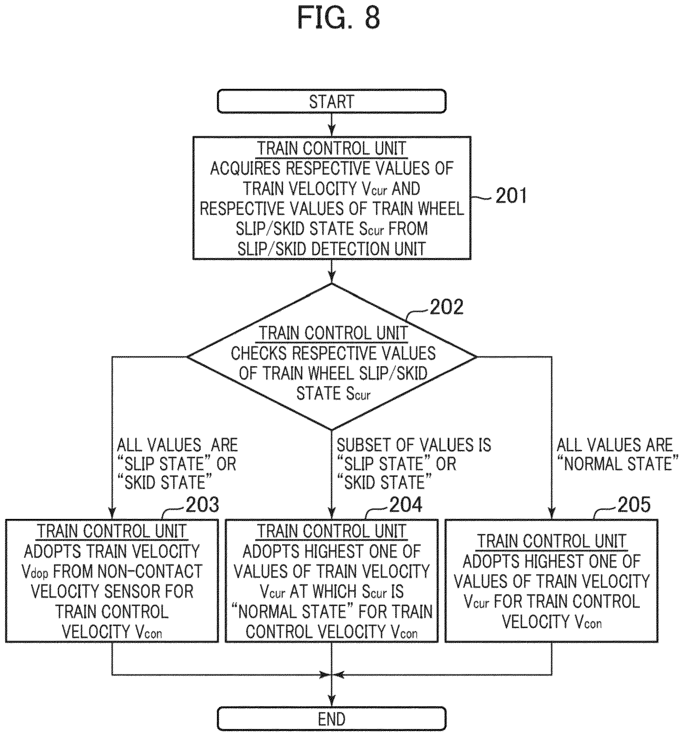

Fig. 8 is a flowchart illustrating a procedure for calculating train control velocity in the system depicted in Fig. 7. This illustrates the procedure in which the train control unit 26 calculates train control velocity V_{con} using the respective values of train velocity V_{cur} and the respective values of train wheel slip/skid state S_{cur}, and train velocity V_{dop} from the non-contact velocity sensor 30.

Operation based on the flowchart in Fig. 8 is as described below.

Step 201: the train control unit 26 acquires the respective values of train velocity V_{cur} and the respective values of train wheel slip/skid state S_{cur} from the slip/skid detection unit 21.

Step 202: the train control unit 26 checks the respective values of train wheel slip/skid state S_{cur}. If all the values of train wheel slip/skid state S_{cur} are slip or skid state, a transition is made to step 203. If, among the respective values of train wheel slip/skid state S_{cur}, at least one or more values are slip or skid state and at least one or more values are normal state, a transition is made to step 204. Otherwise, if all the values of train wheel slip/skid state S_{cur} are normal state, a transition is made to step 205.

Step 203: the train control unit 26 sets the train velocity V_{dop} from the non-contact velocity sensor 30 as the train control velocity V_{con}.

Step 204: the train control unit 26 selects the greatest one of the values of train velocity V_{cur} at which the train wheel slip/skid state S_{cur} is normal state and sets it as the train control velocity V_{con}.

Step 205: the train control unit 26 selects the greatest one of the values of train velocity V_{cur} and sets it as the train control velocity V_{con}.

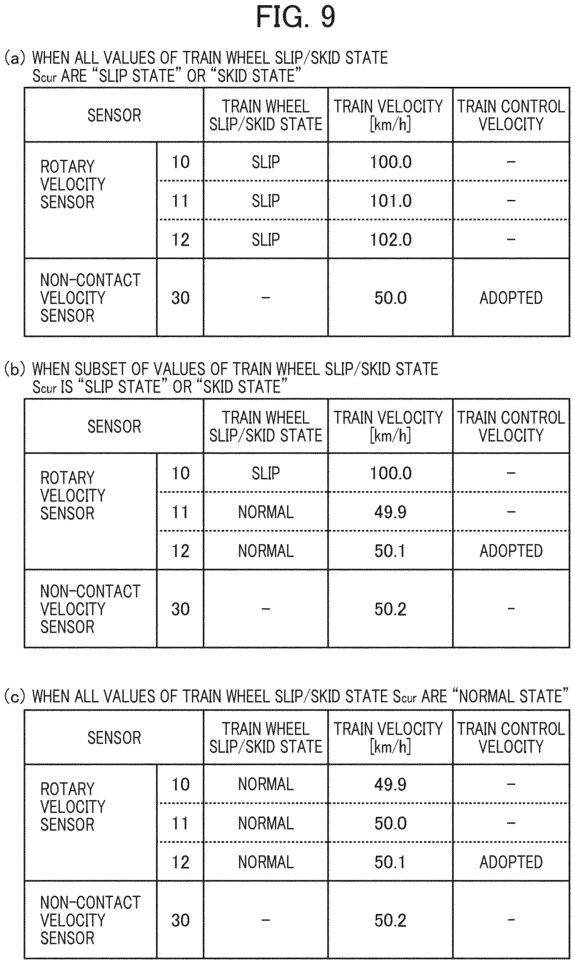

Fig. 9 presents examples of results of calculating train control velocity according to Fig. 8; i.e., examples of results of calculating train control velocity V_{con} which is performed from step 201 to step 205. In a table (a), for all the rotary velocity sensors, a resultant state is slip or skid state, and train velocity V_{dop} is adopted for the train control velocity V_{con}. However, in tables (b) and (c), for at least one or more rotary velocity sensors, the train wheel slip/skid state S_{cur} is normal state, and the highest one of the values of train velocity V_{cur} associated with the rotary velocity sensors for which a resultant state is normal state is adopted as the train control velocity V_{con}.

As above, by using train velocity V_{dop} from the non-contact velocity sensor 30 for calculating train control velocity V_{con}, it is possible to calculate train control velocity V_{con} closer to actual train velocity in comparison with the first reference example and the embodiment.

In the foregoing second reference example, although train velocity V_{dop} from the non-contact velocity sensor is adopted for the train control velocity V_{con} only if a resultant state is slip or skid state for all the rotary velocity sensors, train velocity V_{dop} from the non-contact velocity sensor may be adopted as the train control velocity V_{con} also if the train wheel slip/skid state S_{cur} is normal state for at least one or more rotary velocity sensors.

Note that the present invention is not limited to the embodiment described hereinbefore and various modifications are included therein. For example, the foregoing embodiment is that described in detail to explain the present invention clearly and the invention is not necessarily limited to that including all components described. For example, the system may be configured to detect either the wheel slip or skid state and the other state may be detected by another means.

A subset or all of the aforementioned components, functions, processing units, processing means, etc. may be implemented by hardware; e.g., inter alia, by designing an integrated circuit to implement them. Besides, the aforementioned components, functions, etc. may be implemented by software in such a way that a processor interprets and executes programs implementing the respective functions. Information such as programs implementing the respective functions, tables, and files can be placed in a recording device such as a memory, hard disk, and SSD (Solid State Drive) or a recording medium such as an IC card, SD card, and DVD.

### List of Reference Signs

10, 11, 12: rotary velocity sensor, 20: train control device, 21: slip/skid detection unit, 22: control unit, 23: computing unit, 24: decision unit, 25: recording unit, 26: train control unit, 30: non-contact velocity sensor, 100: train control system

## Claims

1. A train control device (20) comprising:
a slip/skid detection unit (21) that computes train jerk based on axle rotational speed from a rotary velocity sensor (10) and decides that a train is placed in a wheel slip or skid state if an absolute value of the train jerk is equal to or more than a slip/skid decision threshold; and
a train control unit (22) that is connected with the slip/skid detection unit and calculates train control velocity for use in processing to control the train,
**characterized by**,
unless the train is placed in a wheel slip or skid state, the slip/skid detection unit (21) is configured to decide that a wheel slip or skid state of the train has begun to occur upon elapse of a certain period of time after an absolute value of the train jerk has become equal to or more than the slip/skid decision threshold, and the absolute value of the train jerk stayed equal to or more than the slip/skid decision threshold for this certain period of time, and
wherein switching of whether or not to apply the elapse of the certain period of time to deciding whether the wheel slip or skid state of the train has begun to occur or has terminated is performed depending on magnitude of axle rotational speed from the rotary velocity sensor.

2. A train control device (20) comprising:
a slip/skid detection unit (21) that computes train jerk based on axle rotational speed from a rotary velocity sensor (10) and decides that a train is placed in a wheel slip or skid state if an absolute value of the train jerk is equal to or more than a slip/skid decision threshold; and
a train control unit (22) that is connected with the slip/skid detection unit and calculates train control velocity for use in processing to control the train,
**characterized by**,
if the train is placed in a wheel slip or skid state, the slip/skid detection unit (21) is configured to decide that the wheel slip or skid state of the train has terminated upon elapse of a certain period of time after an absolute value of the train jerk has become less than the slip/skid decision threshold, and the absolute value of the train jerk stayed less than the slip/skid decision threshold for this certain period of time, and
wherein switching of whether or not to apply the elapse of the certain period of time to deciding whether the wheel slip or skid state of the train has begun to occur or has terminated is performed depending on magnitude of axle rotational speed from the rotary velocity sensor.

3. The train control device (20) according to any of the previous claims,
wherein the train control velocity is calculated, depending on the wheel slip or skid state of the train.

4. The train control device (20) according to claim 3,
wherein, if the train is placed in the wheel slip or skid state, train velocity from a non-contact velocity sensor (30) is selected for the train control velocity.

5. A train control system (100) comprising at least one or more rotary velocity sensors (10, 11, 12) and the train control device according to claim 1.

6. A train control system (100) comprising at least one or more rotary velocity sensors (10, 11, 12) and the train control device according to claim 2.

7. The train control system (100) according to claim 5 or 6,
wherein the slip/skid detection unit (21) comprises:
an interface to acquire pulse signals from the rotary velocity sensors (10, 11, 12);
a computing unit (23) that converts the pulse signals to velocity information;
a recording unit (25) that holds record of the velocity information; and
a decision unit (24),
wherein:
the recording unit is configured to store at least three pieces of the velocity information obtained for a predetermined time width;
the computing unit computes jerk information based on the at least three pieces of the velocity information; and
the decision unit detects occurrence of wheel slip or skid based on the jerk information.

8. The train control system (100) according to claim 5 or 6,
wherein the slip/skid detection unit (21) comprises:
an interface to acquire pulse signals from the rotary velocity sensors (10, 11, 12);
a computing unit (23) that converts the pulse signals to velocity information;
a recording unit (25) that holds record of the velocity information; and
a decision unit (24),
wherein:
the recording unit is configured to store two pieces of jerk information based on at least three pieces of the velocity information obtained for a predetermined time width;
the computing unit computes jerk information based on the two pieces of jerk information; and
the decision unit detects occurrence of wheel slip or skid based on the jerk information.

9. The train control system (100) according to claim 7 or 8,
wherein the decision unit (24) discriminates slip occurring and skid occurring by comparing multiple pieces of the velocity information relevant to computing the jerk information.

10. The train control system (100) according to claim 7 or 8,
wherein the recording unit (25) retains the obtained jerk information for a certain period of time.

## Patentansprüche

1. Zugsteuervorrichtung (20), umfassend:
eine Schlupf-/Schleuderdetektionseinheit (21), die ruckartige Bewegungen des Zugs basierend auf einer Achsendrehzahl von einem Drehzahlsensor (10) berechnet und entscheidet, dass ein Zug in einen Radschlupf- oder Schleuderstatus versetzt wird , falls ein Absolutwert der ruckartigen Bewegung des Zugs größer oder gleich einem Schlupf-/Schleuderentscheidungsschwellenwert ist; und
eine Zugsteuereinheit (22), die mit der Schlupf-/Schleuderdetektionseinheit verbunden ist und die Zugsteuergeschwindigkeit zur Verwendung bei der Verarbeitung zur Steuerung des Zugs berechnet,
**dadurch gekennzeichnet, dass**:
sofern der Zug nicht in einen Radschlupf- oder Schleuderstatus versetzt wird, die Schlupf-/Schleuderdetektionseinheit (21) ausgelegt ist, um zu entscheiden, dass ein Radschlupf- oder Schleuderstatus des Zugs nach Ablauf eines bestimmten Zeitraums begonnen hat, nachdem ein Absolutwert der ruckartigen Bewegung des Zugs größer oder gleich dem Schlupf-/Schleuderentscheidungsschwellenwert geworden ist, und der Absolutwert der ruckartigen Bewegung des Zugs größer oder gleich dem Schlupf-/Schleuderentscheidungsschwellenwert für diesen bestimmten Zeitraum geblieben ist, und
wobei das Umschalten, ob der Ablauf des bestimmten Zeitraums auf die Entscheidung, ob der Radschlupf- oder Schleuderstatus des Zugs begonnen hat einzutreten oder geendet hat, anzuwenden ist oder nicht, in Abhängigkeit von der Höhe der Achsendrehzahl von dem Drehzahlsensor durchgeführt wird.

2. Zugsteuervorrichtung (20), umfassend:
eine Schlupf-/Schleuderdetektionseinheit (21), die ruckartige Bewegungen des Zugs basierend auf einer Achsendrehzahl von einem Drehzahlsensor (10) berechnet und entscheidet, dass ein Zug in einen Radschlupf- oder Schleuderstatus versetzt wird, falls ein Absolutwert der ruckartigen Bewegung des Zugs größer oder gleich einem Schlupf-/Schleuderentscheidungsschwellenwert ist; und
eine Zugsteuereinheit (22), die mit der Schlupf-/Schleuderdetektionseinheit verbunden ist und die Zugsteuergeschwindigkeit zur Verwendung bei der Verarbeitung zur Steuerung des Zugs berechnet,
**dadurch gekennzeichnet, dass**:
falls der Zug in einen Radschlupf- oder Schleuderstatus versetzt wird, die Schlupf-/Schleuderdetektionseinheit (21) ausgelegt ist, um zu entscheiden, dass der Radschlupf- oder Schleuderstatus des Zugs nach Ablauf eines bestimmten Zeitraums geendet hat, nachdem ein Absolutwert der ruckartigen Bewegung des Zugs kleiner als der Schlupf-/Schleuderentscheidungsschwellenwert geworden ist, und der Absolutwert der ruckartigen Bewegung des Zugs kleiner als der Schlupf-/Schleuderentscheidungsschwellenwert für diesen bestimmten Zeitraum geblieben ist, und
wobei das Umschalten, ob der Ablauf des bestimmten Zeitraums auf die Entscheidung, ob der Radschlupf- oder Schleuderstatus des Zugs begonnen hat einzutreten oder geendet hat, anzuwenden ist oder nicht, in Abhängigkeit von der Höhe der Achsendrehzahl von dem Drehzahlsensor durchgeführt wird.

3. Zugsteuervorrichtung (20) nach einem der vorangegangenen Ansprüche,
wobei die Zugsteuergeschwindigkeit abhängig von dem Radschlupf- oder Schleuderstatus des Zugs berechnet wird.

4. Zugsteuervorrichtung (20) nach Anspruch 3,
wobei, falls der Zug in den Radschlupf- oder Schleuderstatus versetzt wird, die Zuggeschwindigkeit von einem kontaktlosen Geschwindigkeitssensor (30) für die Zugsteuergeschwindigkeit ausgewählt wird.

5. Zugsteuervorrichtung (100), umfassend zumindest einen oder mehrere Drehzahlsensoren (10, 11, 12) und eine Zugsteuervorrichtung nach Anspruch 1.

6. Zugsteuervorrichtung (100), umfassend zumindest einen oder mehrere Drehzahlsensoren (10, 11, 12) und eine Zugsteuervorrichtung nach Anspruch 2.

7. Zugsteuersystem (100) nach Anspruch 5 oder 6,
wobei die Schlupf-/Schleuderdetektionseinheit (21) Folgendes umfasst:
eine Schnittstelle zum Erfassen von Impulssignalen von den Drehzahlsensoren (10, 11, 12);
eine Recheneinheit (23), die die Impulssignale in Geschwindigkeitsinformationen umwandelt;
eine Aufzeichnungseinheit (25), die Aufzeichnungen über die Geschwindigkeitsinformationen führt; und
eine Entscheidungseinheit (24),
wobei:
die Aufzeichnungseinheit ausgelegt ist, um zumindest drei Teile der Geschwindigkeitsinformationen zu speichern, die für eine vorbestimmte Zeitbreite erhalten wurden;
die Recheneinheit Informationen zu ruckartigen Bewegungen basierend auf den zumindest drei Teilen der Geschwindigkeitsinformationen berechnet; und
die Entscheidungseinheit das Eintreten eines Radschlupfes oder Schleuderns basierend auf den Informationen zu ruckartigen Bewegungen detektiert.

8. Zugsteuersystem (100) nach Anspruch 5 oder 6,
wobei die Schlupf-/Schleuderdetektionseinheit (21) Folgendes umfasst:
eine Schnittstelle zum Erfassen von Impulssignalen von den Drehgeschwindigkeitssensoren (10, 11, 12);
eine Recheneinheit (23), die die Impulssignale in Geschwindigkeitsinformationen umwandelt;
eine Aufzeichnungseinheit (25), die Aufzeichnungen über die Geschwindigkeitsinformationen führt; und
eine Entscheidungseinheit (24),
wobei:
die Aufzeichnungseinheit ausgelegt ist, um zwei Teile von Informationen zu ruckartigen Bewegungen basierend auf zumindest drei Teilen der Geschwindigkeitsinformationen zu speichern, die für eine vorbestimmte Zeitbreite erhalten wurden;
die Recheneinheit Informationen zu ruckartigen Bewegungen basierend auf den zwei Teilen von Informationen zu ruckartigen Bewegungen berechnet; und
die Entscheidungseinheit das Eintreten eines Radschlupfes oder Schleuderns basierend auf den Informationen zu ruckartigen Bewegungen detektiert.

9. Zugsteuersystem (100) nach Anspruch 7 oder 8,
wobei die Entscheidungseinheit (24) zwischen einem eintretenden Schlupf und einem eintretenden Schleudern durch Vergleichen mehrerer Teile der Geschwindigkeitsinformationen unterscheidet, die zum Berechnen der Informationen zu ruckartigen Bewegungen relevant sind.

10. Zugsteuersystem (100) nach Anspruch 7 oder 8,
wobei die Aufzeichnungseinheit (25) die erhaltenen Informationen zu ruckartigen Bewegungen für einen bestimmten Zeitraum behält.

## Revendications

1. Dispositif de commande de train (20) comprenant :
une unité de détection de patinage/dérapage (21) qui calcule une secousse de train sur la base d'une vitesse de rotation d'essieu à partir d'un capteur de vitesse de rotation (10) et décide qu'un train est placé dans un état de patinage ou de dérapage de roues si une valeur absolue de la secousse de train est égale ou supérieure à un seuil de décision de patinage/dérapage ; et
une unité de commande de train (22) qui est connectée à l'unité de détection de patinage/dérapage et calcule une vitesse de commande de train pour une utilisation dans le traitement pour commander le train
**caractérisé en ce que**,
à moins que le train ne soit placé dans un état de patinage ou de dérapage de roues, l'unité de détection de patinage/dérapage (21) est configurée pour décider qu'un état de patinage ou de dérapage de roues du train a commencé à se produire après l'écoulement d'une certaine période de temps après qu'une valeur absolue de la secousse de train soit devenue égale ou supérieure au seuil de décision de patinage/dérapage, et que la valeur absolue de la secousse de train est restée égale ou supérieure au seuil de décision de patinage/repérage pendant cette certaine période de temps, et
dans lequel la commutation de l'application ou non de l'écoulement de la certaine période de temps pour décider si l'état de patinage ou de dérapage de roues du train a commencé à se produire ou s'est terminé est effectuée en fonction de l'amplitude de la vitesse de rotation d'essieu à partir du capteur de vitesse de rotation.

2. Dispositif de commande de train (20), comprenant :
une unité de détection de patinage/dérapage (21) qui calcule une secousse de train sur la base d'une vitesse de rotation d'essieu provenant d'un capteur de vitesse de rotation (10) et décide qu'un train est placé dans un état de patinage ou de dérapage de roues si une valeur absolue de la secousse de train est égale ou supérieure à un seuil de décision de patinage/dérapage ; et
une unité de commande de train (22) qui est connectée à l'unité de détection de patinage/dérapage et calcule une vitesse de commande de train pour une utilisation dans un traitement pour commander le train,
**caractérisé en ce que**,
si le train est placé dans un état de patinage ou de dérapage de roues, l'unité de détection de patinage/dérapage (21) est configurée pour décider que l'état de patinage ou de dérapage de roues du train s'est terminé à l'écoulement d'une certaine période de temps après qu'une valeur absolue de la secousse de train soit devenue inférieure au seuil de décision de patinage/dérapage, et que la valeur absolue de la secousse de train est restée inférieure au seuil de décision de patinage/dérapage pendant cette certaine période de temps, et
dans lequel la commutation de l'application ou non de l'écoulement de la certaine période de temps pour décider si l'état de patinage ou de dérapage de roues du train a commencé à se produire ou s'est terminé est effectuée en fonction de l'amplitude de la vitesse de rotation d'essieu à partir du capteur de vitesse de rotation.

3. Dispositif de commande de train (20) selon l'une quelconque des revendications précédentes,
dans lequel la vitesse de commande de train est calculée, en fonction de l'état de patinage ou de dérapage de roues du train.

4. Dispositif de commande de train (20) selon la revendication 3,
dans lequel, si le train est placé dans l'état de patinage ou de dérapage de roues, la vitesse de train à partir d'un capteur de vitesse sans contact (30) est sélectionnée pour la vitesse de commande de train.

5. Système de commande de train (100) comprenant au moins un ou plusieurs capteurs de vitesse de rotation (10, 11, 12) et le dispositif de commande de train selon la revendication 1.

6. Système de commande de train (100) comprenant au moins un ou plusieurs capteurs de vitesse de rotation (10, 11, 12) et le dispositif de commande de train selon la revendication 2.

7. Système de commande de train (100) selon la revendication 5 ou 6,
dans lequel l'unité de détection de patinage/dérapage (21) comprend :
une interface pour acquérir des signaux d'impulsion provenant des capteurs de vitesse de rotation (10, 11, 12) ;
une unité de calcul (23) qui convertit les signaux d'impulsion en informations de vitesse ;
une unité d'enregistrement (25) qui conserve l'enregistrement des informations de vitesse ; et
une unité de décision (24),
dans lequel :
l'unité d'enregistrement est configurée pour stocker au moins trois éléments des informations de vitesse obtenues pendant une largeur de temps prédéterminée ;
l'unité de calcul calcule des informations de secousse sur la base des au moins trois éléments des informations de vitesse ; et
l'unité de décision détecte l'occurrence d'un patinage ou d'un dérapage de roues sur la base des informations de secousse.

8. Système de commande de train (100) selon la revendication 5 ou 6,
dans lequel l'unité de détection de patinage/dérapage (21) comprend :
une interface pour acquérir des signaux d'impulsion provenant des capteurs de vitesse de rotation (10, 11, 12) ;
une unité de calcul (23) qui convertit les signaux d'impulsion en informations de vitesse ;
une unité d'enregistrement (25) qui conserve l'enregistrement des informations de vitesse ; et
une unité de décision (24),
dans lequel :
l'unité d'enregistrement est configurée pour stocker deux éléments d'informations de secousse sur la base d'au moins trois éléments d'informations de vitesse obtenues pendant une largeur de temps prédéterminée ;
l'unité de calcul calcule des informations de secousse sur la base des deux éléments d'informations de secousse ; et
l'unité de décision détecte l'occurrence d'un patinage ou d'un dérapage de roues sur la base des informations de secousse.

9. Système de commande de train (100) selon la revendication 7 ou 8,
dans lequel l'unité de décision (24) discrimine le patinage se produisant et le dérapage se produisant en comparant de multiples éléments des informations de vitesse pertinents pour le calcul des informations de secousse.

10. Système de commande de train (100) selon la revendication 7 ou 8,
dans lequel l'unité d'enregistrement (25) conserve les informations de secousse obtenues pendant une certaine période de temps.
